# EUROPEAN PATENT SPECIFICATION

(11) **EP 4 240 787 B1**
(45) Date of publication and mention of the grant of the patent: **08.01.2025**
(21) Application number: 21805524.2
(22) Date of filing: 05.11.2021
(51) Int. Cl.: C08G 77/42, C08G 77/44, C08G 77/458, C08G 77/46, C08G 77/48

(54) **POLYSILOXANE POLYMER**
POLYSILOXANPOLYMER
POLYMÈRE POLYSILOXANE

(30) Priority: 09.11.2020 EP 20206357
(43) Date of publication of application: 13.09.2023
(73) Proprietor: BYK-Chemie GmbH, 46483 Wesel (DE)
(72) Inventor: GRIESEL, Wolfgang, 46483 Wesel (DE); JAUNKY, Guillaume, Wojciech, 46483 Wesel (DE)
(74) Representative: Altana IP Department
(86) International application number: PCT/EP2021/080803
(87) International publication number: WO 2022/096662

(56) References cited:
- EP-A1- 1 496 080
- EP-A2- 2 662 400
- US-A1- 2012 029 111

## Description

The invention relates to the use of polysiloxane polymer and to a method for improving the cleanability of a surface coating or for reducing the dirt pick up of a surface coating.

US 6534188 B describes film-forming compositions for preparation of clear top coats having improved scratch resistance. The film-forming compositions comprise a polysiloxane, which comprises a polysiloxane segment and an organic polyvalent linking group selected from the group consisting of alkylene, oxyalkylene, and alkylene aryl.

US 2002/0103288 A relates to coating compositions and polymeric moulding compounds having anti-adhesion and dirt repellency properties. The composition comprises 0.1 to 10 % by weight of a branched polymer which comprises a polymeric base molecule and also polydiorganosiloxane side chains which are bonded covalently to the base molecule via Si-C bonds. The long-term anti-adhesion and dirt repellency properties provided by the branched polymer are not always satisfactory.

US 8486188 B relates to polyhydroxy-functional polysiloxanes as anti-adhesive and dirt-repellant additives. The polyhydroxy-functional polysiloxanes can be prepared by the addition reaction of at least one branched glycidol-based polyhydroxy-functional allyl polyether in the presence of an acid-buffering agent with an Si-H-functional alkyl polysiloxane. The use of glycidol-based materials on an industrial scale has the drawback that glycidol is relatively expensive and is the subject of industrial hygiene and safety concerns.

EP 1496080 A relates to an alternating copolymer of organopolysiloxane with glycerol derivatives and to a cosmetic composition comprising the same as an oil agent or an emulsifier. The alternating copolymer may be added to a paint to prevent blocking or to improve flatness, smoothness and abrasion resistance of an applied paint.

US 2021/0029111 A relates to amphiphilic polysiloxane prepolymers suitable for making hydrogel contact lenses.

EP 2662400 A relates to a block type organopolysiloxane and to a cosmetic comprising the block type polysiloxane. The block type organopolysiloxane is prepared from a polysiloxane having two terminal Si-H groups and a compound having two ethylenically unsaturated groups and a polyether group terminated by a hydroxyl group.

There is an ongoing need for additives which provide anti-adhesive and dirt-repellant properties to coatings and other polymeric surfaces. In particular, there is a need for additives providing such properties over extended periods of time, wear, and cleaning cycles.

The invention relates to the use of a polymer for improving the cleanability of a surface coating or for reducing the dirt pick up of a surface coating, wherein the polymer is a non-crosslinked polymer having a polymer main chain comprising
i) polysiloxane segments comprising repeating units of the formula (I) 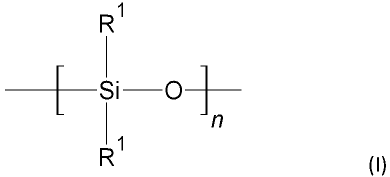 wherein R¹ independent of each occurrence represents a hydrocarbyl group and n is an integer in the range of 6 to 150, and
ii) non-polysiloxane segments having at least one functional group comprising at least one of hydroxyl group, acryloyl group, methacryloyl group, acetyl group, urethane group, and methyl ether group,
wherein the number of links between non-polysiloxane segments and polysiloxane segments in the polymer is less than 9.5 %, calculated on the average number of silicon atoms per polysiloxane segment, and wherein at least one non-polysiloxane segment is located between two polysiloxane segments.

The polymer is very suitable as additive for coating compositions. It provides anti-adhesive and dirt-repellant properties to coatings and other polymeric surfaces. Other properties of the coatings, like levelling, gloss, and cratering are not negatively affected.

The polymer is a non-crosslinked polymer. A non-crosslinked polymer has a molecular weight which can be determined and is less than infinite. Non-crosslinked polymers are either liquid or can form a liquid melt at increased temperature. In some embodiments, the polymer is a linear or essentially linear polymer. In other embodiments, the polymer may be branched or have a comb-like morphology.

The polymer comprises polysiloxane segments comprising repeating units of the formula (I) 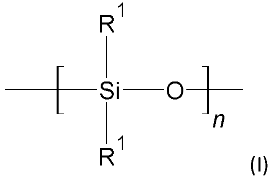 wherein R¹ independent of each occurrence represents a hydrocarbyl group and n is an integer in the range of 6 to 150. In some embodiments, the polysiloxane segments consist of repeating units of formula (I). R¹ in formula (I) independent of each occurrence represents a hydrocarbyl group. In preferred embodiments, R¹ represents a hydrocarbyl group having 1 to 12 carbon atoms. Examples of preferred hydrocarbyl groups include methyl groups, octyl groups, and phenyl groups. In typical embodiments, R¹ in formula (I) independent of each occurrence represents a C₁ to C₄ alkyl group or a phenyl group. In some embodiments, 70 to 100 % of R¹ groups are methyl groups.

Preferably, n in formula (I) is an integer in the range of 10 to 120, more preferably in the range of 10 to 60.

The polymer further comprises non-polysiloxane segments having at least one functional group comprising at least one of hydroxyl group, acryloyl group, methacryloyl group, acetyl group, urethane group, and methyl ether group. Preferred functional groups are hydroxyl groups, acryloyl groups, and methacryloyl groups. Hydroxyl groups are particularly preferred. The functional groups allow the polymer of the invention to be adapted to specific binders or to be chemically linked to a polymer network, when the polymer of the invention is used as additive in a curable composition.

In some embodiments, the non-polysiloxane segments consist of a hydrocarbon main chain. In other embodiments, the non-polysiloxane segments consist of a main chain having ether groups, ester groups, or combinations thereof. In some embodiments, hydroxyl groups as functional groups are directly linked to the non-polysiloxane main chain. In other embodiments, the functional groups are linked to the non-polysiloxane segment via a group comprising at least one of an ester group or an ether group.

In preferred embodiments, the non-polysiloxane segments are linked to the polysiloxane segments via an Si-C bond. Generally, the polysiloxane segments and non-polysiloxane segments are arranged in alternating order in the polymer of the invention. In preferred embodiments, the terminal segments of the polymer of the invention are non-polysiloxane segments.

In all embodiments at least one non-polysiloxane segment is located between two polysiloxane segments.

The number of links between the non-polysiloxane segments and polysiloxane segments in the polymer is less than 9.5 %, calculated on the average number of silicon atoms per polysiloxane segment.

In a preferred embodiment, the number of links between non-polysiloxane segments and polysiloxane segments in the polymer is less than 9.0 %, preferably less than 8.5 %, more preferably less than 8.0 %, and most preferably less than 7.5 %, calculated on the average number of silicon atoms per polysiloxane segment.

Generally, the number of links between non-polysiloxane segments and polysiloxane segments in the polymer is less more 0.8 %, preferably more than 1.0 %, and most preferably more than 1.2 %, calculated on the average number of silicon atoms per polysiloxane segment.

In typical embodiments, the number of links between non-polysiloxane segments and polysiloxane segments in the polymer is in the range of more than 0.8 % and less than 8.0 %, calculated on the average number of silicon atoms per polysiloxane segment.

The number of links between non-polysiloxane segments and polysiloxane segments in the polymer of the invention is determined by the number of Si-H groups in the polysiloxane starting material from which the polymer of the invention is prepared. Generally, the number of links between non-polysiloxane segments and polysiloxane segments in the polymer, calculated on the average number of silicon atoms per polysiloxane segment, is equal to the % of the silicon atoms of the polysiloxane starting material having Si-H groups.

In addition to the non-polysiloxane segments having functional groups, the polymer may further comprise non-polysiloxane segments having no functional groups. Generally, the average number of functional groups per non-polysiloxane segment is in the range of 0.8 to 2.5

The polymer preferably has a number average molecular weight Mn in the range of 1800 g/mol to 15000 g/mol. The weight average molecular weight Mw generally is in the range of 2000 to 100000 g/mol, preferably 3000 to 60000 g/mol, more preferably 4000 to 50000 g/mol, still more preferably 5000 to 40000 g/mol.

The number average and weight average molecular weights can be determined by gel permeation chromatography carried out at 22°C using a separation module Waters 2695 and a refractive index detector Waters 2414. Toluene or THF is a suitable eluent, using polydimethylsiloxane standards for calibration.

In a preferred embodiment, the polymer is obtainable by a process comprising
a) Providing a polysiloxane comprising repeating units of formula (I) as described above and having at least two Si-H groups, wherein less than 9.5 % of the silicon atoms of the polysiloxane have Si-H groups,
b) Providing a non-polysiloxane compound having at least two ethylenically unsaturated groups per molecule,
c) Providing a non-polysiloxane compound having one ethylenically unsaturated group per molecule,
   wherein at least one of b) or c) has at least one functional group per molecule comprising at least one of hydroxyl group, acryloyl group, methacryloyl group, acetyl group, urethane group, and methyl ether group, and
d) covalently linking to the polysiloxane having at least two Si-H groups, the non-polysiloxane compound having at least two ethylenically unsaturated groups per molecule, and the non polysiloxane compound having one ethylenically unsaturated group per molecule.

In some embodiments, the polysiloxane provided in step a) of the process is polysiloxane having two terminal Si-H groups.

In another embodiment, the polysiloxane backbone provided in step a) is a polysiloxane having at least two lateral Si-H groups.

Suitable polysiloxanes having at least two Si-H groups can be represented by the following general formula (II)

MaM'bDcD'dTeQf (II)

wherein
- M represents [R₁SiO_{1/2}]
- M' represents [R₁SiHO_{1/2}]
- D represents [R₁SiO_{2/2}]
- D' represents [R₁SiHO_{2/2}]
- T represents [R₁SiO_{3/2}]
- Q represents [SiO_{4/2}]
- a is an integer of 0 to 10, preferably 0 to 2, more preferably 0,
- b is an integer of 0 to 10, preferably 0 to 2, more preferably 2,
- c is an integer of 0 to 300, preferably 2 to 250, more particularly 5 to 200,
- d is an integer of 0 to 10, preferably 0 to 2, more particularly 0,
- e is an integer of 0 to 10, preferably 0 to 5, more particularly 0,
- f is an integer of 0 to 10, preferably 0 to 5, more particularly 0,
- R¹ independent of each occurrence is a hydrocarbyl group a defined in formula (I) above with the proviso that b+d≧2.

The description of polysiloxanes using M, D, T and Q units is generally known in the art. Compounds of formula (I) can be prepared by well-known equilibration methods.

The non-polysiloxane compound having at least two ethylenically unsaturated groups per molecule does not comprise polysiloxane segments. Generally, it has two or three ethylenically unsaturated groups, preferably two ethylenically unsaturated groups. Allyl ethers and allyl esters are very suitable ethylenically unsaturated groups. Examples of suitable non-polysiloxane compounds are diallyl ethers of triols, such as trimethylol propane or glycerol, as well as alkoxylated derivatives of such triols.

The non-polysiloxane compound having one ethylenically unsaturated group per molecule does not comprise polysiloxane segments. Allyl ethers and allyl esters are very suitable ethylenically unsaturated groups. Examples of suitable non-polysiloxane compounds are monoallyl ethers of diols.

In step d), the polysiloxane having at least two Si-H groups, the non-polysiloxane compound having at least two ethylenically unsaturated groups per molecule, and the non-polysiloxane compound having one ethylenically unsaturated group per molecule are covalently linked by reacting the Si-H groups with the ethylenically unsaturated groups via a hydrosilylation reaction. Such hydrosilylation reactions are described in WO 2019/020542.

Generally, all or substantially all Si-H groups are reacted in the hydrosilylation reaction. Hence, the polymer of the invention is generally free or substantially free of Si-H groups.

In some embodiments, non-polysiloxane compounds having a hydroxyl group are used. This will initially lead to polymers having hydroxyl functional groups. If so desired, the hydroxyl groups may be converted to other functional groups in a subsequent reaction step. In exemplary embodiments, hydroxyl groups may be concerted to acryloyl- or methacryloyl groups by esterification with acrylic acid or methacrylic acid, respectively. Instead of acrylic acid or methacrylic acid, also lower alkyl ester of these acids can be used in transesterification reaction.

Therefore, in some embodiments of the process for preparing the polymer the non-polysiloxane compound provided in step b), or the non-polysiloxane compound provided in step c), or both non-polysiloxane compounds comprises or comprise at least one hydroxyl group, and the process further comprises step e) of reacting the hydroxyl group(s) by esterification/transesterification, acetylation, by reaction with isocyanate, or by alkylation to provide an acryloyl group, methacryloyl group, acetyl group, urethane group, or alkyl ether group, respectively.

As mentioned above, the polymer is very suitable as an additive to provide anti-adhesive and dirt-repellant properties to coatings and other polymeric surfaces. The use can also be described as a process for improving the cleanability of a surface coating or for reducing the dirt pick up of a surface coating, comprising including the polymer in a coating composition.

Also disclosed is a curable composition comprising
a) a binder having functional groups comprising at least one of hydroxyl group, acryloyl group, methacryloyl group, acetyl group, urethane group, and methyl ether group,
b) a crosslinking agent or crosslinking initiator for the functional groups of the binder, and
c) the polymer as used according to the invention.

In preferred embodiments of the curable composition, the binder a) comprises at least one of polyacrylate polyol, polyester polyol, polyether polyol, or polyurethane polyol.

Said composition preferably contains the polymer as used according to the invention in an amount of from 0.10 to 10.00 % by weight, preferably of from 0.20 to 8.00 % by weight, more preferably of from 0.30 to 7.00 % by weight or of from 0.30 to 6.00 % weight or of from 0.30 to 5.00 % by weight, in particular of from 0.50 to 5.00 % by weight, based in each case on the total weight of the composition.

The polymers as used according to the invention can be included in the composition as 100% substances, as a solution, as dispersion or as an emulsion.

The properties of the compositions, in particular of coating compositions, moulding compounds and cosmetic formulations are not impaired by the amount of the polymer used according to the invention present therein. The presence or use of these polymers does not have a negative effect e.g. in respect of corrosion protection, gloss preservation, weather resistance and/or mechanical strength of the coatings obtained from these compositions.

In addition, the curable coating composition may contain pigments or fillers. The choice of such pigments or fillers can be selected by the skilled person according to the requirements of the individual case.

The curable coating composition may further contain deaerating agents, defoamers, emulsifiers, wetting and dispersing agents, adhesion promoters, film-forming adjuvants, rheology control additives (thickeners), flame retardants, siccatives, drying agents, anti-skinning agents, corrosion inhibitors, waxes, matting agents and other additives known to those skilled in the art. Such additives can be selected by the skilled person according to the requirements of the individual case on the basis of his specialist knowledge and used in the customary and known, effective amounts.

The invention further relates to a method for improving the cleanability of a surface coating or for reducing the dirt pick up of a surface coating, comprising including in a surface coating composition a non-crosslinked polymer having a polymer main chain comprising
i) polysiloxane segments comprising repeating units of the formula (I) 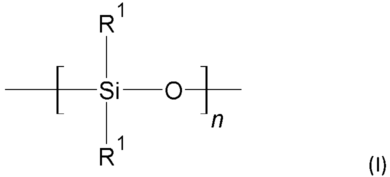 wherein R¹ independent of each occurrence represents a hydrocarbyl group and n is an integer in the range of 6 to 150, and
ii) non-polysiloxane segments having at least one functional group comprising at least one of hydroxyl group, acryloyl group, methacryloyl group, acetyl group, urethane group, and methyl ether group,
wherein the number of links between non-polysiloxane segments and polysiloxane segments in the polymer is less than 9.5 %, calculated on the average number of silicon atoms per polysiloxane segment, and wherein at least one non-polysiloxane segment is located between two polysiloxane segments. According to the method, the polymer is included in the composition in an amount to sufficient for improving the cleanability of a surface coating or for reducing the dirt pick up of a surface coating.

### Examples

### Preparation of polymers

### Comparative Example A

### Reaction of a methyl-hydrogen siloxane of average formula MH2D14 with trimethylolpropane diallylether and ethylene glycol monoallylether (molar ratio 3.0:2.0:2.3)

12.5 % of the silicon atoms of the polysiloxane MH2D14 have Si-H groups. This corresponds to a reaction product wherein the number of links between non-polysiloxane segments and polysiloxane segments in the polymer is 12.5 %, calculated on the average number of silicon atoms per polysiloxane segment.

In a flask equipped with stirrer, thermometer, reflux condenser and nitrogen purge were placed 201.415 g of the methyl-hydrogen siloxane. The flask was heated to 75°C and 0.550 g of a 0.2% solution of Karstedt catalyst in xylene were added. Subsequently, 23.300 g of trimethylolpropane diallylether were added via a dropping funnel during a period of 20 minutes, followed by a period of 30 minutes stirring at 100°C. Then 25.285 g ethylene glycol monoallylether were added via a dropping funnel during a period of 20 minutes, followed by stirring at 100 °C for 3 hours. Thereafter volatiles were removed by vacuum distillation at 130 °C and 15 mbar for a period of 1 hour. The reaction product was characterized by gel permeation chromatography: Mn 2266 g/mol, Mw 5682 g/mol.

### Comparative Example B

### Reaction of a methyl-hydrogen siloxane of average formula MH2D6 with trimethylolpropane diallylether and ethylene glycol monoallylether (molar ratio 3.0:2.0:2.3)

25.0 % of the silicon atoms of the polysiloxane MH2D6 have Si-H groups. This corresponds to a reaction product wherein the number of links between non-polysiloxane segments and polysiloxane segments in the polymer is 25.0 %, calculated on the average number of silicon atoms per polysiloxane segment.

In a flask equipped with stirrer, thermometer, reflux condenser and nitrogen purge were placed 171.011 g of the methyl-hydrogen siloxane. The flask was heated to 75°C and 0.550 g of a 0.2% solution of Karstedt catalyst in xylene were added. Subsequently, 37.881 g of trimethylolpropane diallylether were added via a dropping funnel during a period of 20 minutes, followed by a period of 3 hours stirring at 100°C. Then 41.108 g ethylene glycol monoallylether were added via a dropping funnel during a period of 20 minutes, followed by stirring at 100 °C for 3 hours. Thereafter volatiles were removed by vacuum distillation at 130 °C and 15 mbar for a period of 1 hour. The reaction product was characterized by gel permeation chromatography: Mn 1827 g/mol, Mw 3563 g/mol

### Example 1

### Reaction of a methyl-hydrogen siloxane of average formula MH2D79.3 with trimethylolpropane diallylether and ethylene glycol monoallylether (molar ratio 3.0:2.0:2.3)

2.46 % of the silicon atoms of the polysiloxane MH2D79.3 have Si-H groups. This corresponds to a reaction product wherein the number of links between non-polysiloxane segments and polysiloxane segments in the polymer is 2.46 %, calculated on the average number of silicon atoms per polysiloxane segment.

In a flask equipped with stirrer, thermometer, reflux condenser and nitrogen purge were placed 238.427 g of the methyl-hydrogen siloxane. The flask was heated to 75°C and 0.550 g of a 0.2% solution of Karstedt catalyst in xylene were added. Subsequently, 5.550 g of trimethylolpropane diallylether were added via a dropping funnel during a period of 20 minutes, followed by a period of 3 hours stirring at 100°C. Then 6.023 g ethylene glycol monoallylether were added via a dropping funnel during a period of 20 minutes, followed by stirring at 100 °C for 3 hours. Thereafter volatiles were removed by vacuum distillation at 130 °C and 15 mbar for a period of 1 hour. The reaction product was characterized by gel permeation chromatography: Mn 2813 g/mol, Mw 22909 g/mol

### Example 2

### Reaction of a methyl-hydrogen siloxane of average formula MH2D106.3 with trimethylolpropane diallylether and ethylene glycol monoallylether (molar ratio 3.0:2.0:2.3)

1.84 % of the silicon atoms of the polysiloxane MH2D106.3 have Si-H groups. This corresponds to a reaction product wherein the number of links between non-polysiloxane segments and polysiloxane segments in the polymer is 1.84 %, calculated on the average number of silicon atoms per polysiloxane segment.

In a flask equipped with stirrer, thermometer, reflux condenser and nitrogen purge were placed 241.140 g of the methyl-hydrogen siloxane. The flask was heated to 75°C and 0.550 g of a 0.2% solution of Karstedt catalyst in xylene were added. Subsequently, 4.249 g of trimethylolpropane diallylether were added via a dropping funnel during a period of 20 minutes, followed by a period of 3 hours stirring at 100°C. Then 4.661 g ethylene glycol monoallylether were added via a dropping funnel during a period of 20 minutes, followed by stirring at 100 °C for 3 hours. Thereafter volatiles were removed by vacuum distillation at 130 °C and 15 mbar for a period of 1 hour. The reaction product was characterized by gel permeation chromatography: Mn 3710 g/mol, Mw 32053 g/mol

### Preparation of Intermediate I1

### Reaction of trimethylolpropane diallyletherwith ethoxylated trimethylolpropane oxetane (average of 3.3 ethylene oxide groups)

In a flask equipped with stirrer, thermometer, reflux condenser and nitrogen purge were placed 137.32 g trimethylolpropane diallylether and 0.25 g trifluoromethane sulfonic acid. The mixture was heated to 80°C. At this temperature 362.68 g of ethoxylated trimethylolpropane oxetane (average of 3.3 ethylene oxide groups) were added during a period of 5 hours. Thereafter, the reaction was continued for further 3 hours. Subsequently, a basic mineral clay was added and the reaction mixture was stirred for 2 hours, followed by filtration. The reaction product was characterized by gel permeation chromatography: Mn 842 g/mol, Mw 2014 g/mol

### Example 3

### Reaction of a methyl-hydrogen siloxane of average formula MH2D37 with the intermediate I1 (molar ratio 2.4:3.4)

5.12 % of the silicon atoms of the polysiloxane MH2D37 have Si-H groups. This corresponds to a reaction product wherein the number of links between non-polysiloxane segments and polysiloxane segments in the polymer is 5.12 %, calculated on the average number of silicon atoms per polysiloxane segment.

In a flask equipped with stirrer, thermometer, reflux condenser and nitrogen purge were placed 104.49 g of the methyl-hydrogen siloxane, 45.00 g of the intermediate 11, and 45.00 g of xylene. The flask was heated to 75°C and 0.52 g of a 0.2% solution of Karstedt catalyst in xylene were added. A temperature increased to 104°C was observed. The reaction mixture was stirred at 100 °C for a period of 1 hour. Thereafter volatiles were removed by vacuum distillation at 130 °C and 15 mbar for a period of 1 hour. The reaction product was characterized by gel permeation chromatography: Mn 3581 g/mol, Mw 21060 g/mol

### Example 4

### Reaction of a methyl-hydrogen siloxane of average formula MH2D37 with the intermediate I1 (molar ratio 2.9:3.9)

5.12 % of the silicon atoms of the polysiloxane MH2D37 have Si-H groups. This corresponds to a reaction product wherein the number of links between non-polysiloxane segments and polysiloxane segments in the polymer is 5.12 %, calculated on the average number of silicon atoms per polysiloxane segment.

In a flask equipped with stirrer, thermometer, reflux condenser and nitrogen purge were placed 106.51 g of the methyl-hydrogen siloxane, 43.49 g of the intermediate 11, and 45.00 g of xylene. The flask was heated to 75°C and 0.52 g of a 0.2% solution of Karstedt catalyst in xylene were added. A temperature increased to 104°C was observed. The reaction mixture was stirred at 100 °C for a period of 1 hour. Thereafter volatiles were removed by vacuum distillation at 130 °C and 15 mbar for a period of 1 hour. The reaction product was characterized by gel permeation chromatography: Mn 3774 g/mol, Mw 23394 g/mol

### Example 5

### Reaction of a methyl-hydrogen siloxane of average formula MH2D37 with the intermediate I1 (molar ratio 3.2:4.2)

5.12 % of the silicon atoms of the polysiloxane MH2D37 have Si-H groups. This corresponds to a reaction product wherein the number of links between non-polysiloxane segments and polysiloxane segments in the polymer is 5.12 %, calculated on the average number of silicon atoms per polysiloxane segment.

In a flask equipped with stirrer, thermometer, reflux condenser and nitrogen purge were placed 107.76 g of the methyl-hydrogen siloxane, 42.24 g of the intermediate I1, and 45.00 g of xylene. The flask was heated to 75°C and 0.52 g of a 0.2% solution of Karstedt catalyst in xylene were added. A temperature increased to 104°C was observed. The reaction mixture was stirred at 100 °C for a period of 1 hour. Thereafter volatiles were removed by vacuum distillation at 130 °C and 15 mbar for a period of 1 hour. The reaction product was characterized by gel permeation chromatography: Mn 4021 g/mol, Mw 24922 g/mol

### Preparation of Intermediate I2

### Reaction of trimethylolpropane diallylether with epsilon caprolactone and trimethylolpropane oxetane, molar ratio 1:3:1

In a flask equipped with stirrer, thermometer, reflux condenser and nitrogen purge were placed 143.47 g trimethylolpropane diallylether and 0.23 g trifluoromethane sulfonic acid. The mixture was heated to 80°C. At this temperature a mixture of 229.06 g epsilon caprolactone and 77.47 g trimethylolpropane oxetane was added during a period of 5 hours. Thereafter, the reaction was continued for further 90 minutes. Subsequently, a basic mineral clay was added and the reaction mixture was stirred for 2 hours, followed by filtration. The reaction product was characterized by gel permeation chromatography: Mn 1034 g/mol, Mw 1811 g/mol

### Example 6

### Reaction of a methyl-hydrogen siloxane of average formula MH2D37 with the intermediate I2 (molar ratio 2.4:3.4)

5.12 % of the silicon atoms of the polysiloxane MH2D37 have Si-H groups. This corresponds to a reaction product wherein the number of links between non-polysiloxane segments and polysiloxane segments in the polymer is 5.12 %, calculated on the average number of silicon atoms per polysiloxane segment.

In a flask equipped with stirrer, thermometer, reflux condenser and nitrogen purge were placed 109.09 g of the methyl-hydrogen siloxane, 40.91 g of the intermediate I2, and 45.00 g of xylene. The flask was heated to 75°C and 0.52 g of a 0.2% solution of Karstedt catalyst in xylene were added. A temperature increased to 104°C was observed. The reaction mixture was stirred at 100 °C for a period of 1 hour. Thereafter volatiles were removed by vacuum distillation at 130 °C and 15 mbar for a period of 1 hour. The reaction product was characterized by gel permeation chromatography: Mn 4366 g/mol, Mw 27109 g/mol

### Example 7

### Reaction of a methyl-hydrogen siloxane of average formula MH2D37 with the intermediate I2 (molar ratio 2.9:3.9)

5.12 % of the silicon atoms of the polysiloxane MH2D37 have Si-H groups. This corresponds to a reaction product wherein the number of links between non-polysiloxane segments and polysiloxane segments in the polymer is 5.12 %, calculated on the average number of silicon atoms per polysiloxane segment.

In a flask equipped with stirrer, thermometer, reflux condenser and nitrogen purge were placed 110.91 g of the methyl-hydrogen siloxane, 39.09 g of the intermediate I2, and 45.00 g of xylene. The flask was heated to 75°C and 0.52 g of a 0.2% solution of Karstedt catalyst in xylene were added. A temperature increased to 104°C was observed. The reaction mixture was stirred at 100 °C for a period of 1 hour. Thereafter volatiles were removed by vacuum distillation at 130 °C and 15 mbar for a period of 1 hour. The reaction product was characterized by gel permeation chromatography: Mn 4882 g/mol, Mw 29284 g/mol

### Example 8

### Reaction of a methyl-hydrogen siloxane of average formula MH2D37 with the intermediate I2 (molar ratio 3.2:4.2)

5.12 % of the silicon atoms of the polysiloxane MH2D37 have Si-H groups. This corresponds to a reaction product wherein the number of links between non-polysiloxane segments and polysiloxane segments in the polymer is 5.12 %, calculated on the average number of silicon atoms per polysiloxane segment.

In a flask equipped with stirrer, thermometer, reflux condenser and nitrogen purge were placed 112.08 g of the methyl-hydrogen siloxane, 37.92 g of the intermediate I2, and 45.00 g of xylene. The flask was heated to 75°C and 0.52 g of a 0.2% solution of Karstedt catalyst in xylene were added. A temperature increased to 104°C was observed. The reaction mixture was stirred at 100 °C for a period of 1 hour. Thereafter volatiles were removed by vacuum distillation at 130 °C and 15 mbar for a period of 1 hour. The reaction product was characterized by gel permeation chromatography: Mn 4839 g/mol, Mw 31244 g/mol

### Preparation of intermediate I3

### Reaction of trimethylolpropane diallylether with ethoxylated trimethylolpropane oxetane (average of 3.3 ethylene oxide groups), molar ratio 1:1

In a flask equipped with stirrer, thermometer, reflux condenser and nitrogen purge were placed 215.46 g trimethylolpropane diallylether and 0.25 g trifluoromethane sulfonic acid. The mixture was heated to 80°C. At this temperature 284.54 g of ethoxylated trimethylolpropane oxetane (average of 3.3 ethylene oxide groups) were added during a period of 5 hours. Thereafter, the reaction was continued for further 6 hours. Subsequently, a basic mineral clay was added and the reaction mixture was stirred for 2 hours, followed by filtration. The reaction product was characterized by gel permeation chromatography: Mn 782 g/mol, Mw 1887 g/mol

### Example 9

### Reaction of a methyl-hydrogen siloxane of average formula MH2D37 with the intermediate I3 (molar ratio 2.4:3.4)

5.12 % of the silicon atoms of the polysiloxane MH2D37 have Si-H groups. This corresponds to a reaction product wherein the number of links between non-polysiloxane segments and polysiloxane segments in the polymer is 5.12 %, calculated on the average number of silicon atoms per polysiloxane segment.

In a flask equipped with stirrer, thermometer, reflux condenser and nitrogen purge were placed 117.35 g of the methyl-hydrogen siloxane, 32.65 g of the intermediate I3, and 45.00 g of xylene. The flask was heated to 75°C and 0.52 g of a 0.2% solution of Karstedt catalyst in xylene were added. A temperature increased to 104°C was observed. The reaction mixture was stirred at 100 °C for a period of 1 hour. Thereafter volatiles were removed by vacuum distillation at 130 °C and 15 mbar for a period of 1 hour. The reaction product was characterized by gel permeation chromatography: Mn 4691 g/mol, Mw 27770 g/mol

### Example 10

### Reaction of a methyl-hydrogen siloxane of average formula MH2D37 with the intermediate I3 (molar ratio 2.9:3.9)

5.12 % of the silicon atoms of the polysiloxane MH2D37 have Si-H groups. This corresponds to a reaction product wherein the number of links between non-polysiloxane segments and polysiloxane segments in the polymer is 5.12 %, calculated on the average number of silicon atoms per polysiloxane segment.

In a flask equipped with stirrer, thermometer, reflux condenser and nitrogen purge were placed 118.97 g of the methyl-hydrogen siloxane, 31.03 g of the intermediate I3, and 45.00 g of xylene. The flask was heated to 75°C and 0.52 g of a 0.2% solution of Karstedt catalyst in xylene were added. A temperature increased to 104°C was observed. The reaction mixture was stirred at 100 °C for a period of 1 hour. Thereafter volatiles were removed by vacuum distillation at 130 °C and 15 mbar for a period of 1 hour. The reaction product was characterized by gel permeation chromatography: Mn 4856 g/mol, Mw 29320 g/mol

### Example 11

### Reaction of a methyl-hydrogen siloxane of average formula MH2D37 with the intermediate I3 (molar ratio 3.4:4.2)

5.12 % of the silicon atoms of the polysiloxane MH2D37 have Si-H groups. This corresponds to a reaction product wherein the number of links between non-polysiloxane segments and polysiloxane segments in the polymer is 5.12 %, calculated on the average number of silicon atoms per polysiloxane segment.

In a flask equipped with stirrer, thermometer, reflux condenser and nitrogen purge were placed 119.96 g of the methyl-hydrogen siloxane, 30.04 g of the intermediate I3, and 45.00 g of xylene. The flask was heated to 75°C and 0.52 g of a 0.2% solution of Karstedt catalyst in xylene were added. A temperature increased to 104°C was observed. The reaction mixture was stirred at 100 °C for a period of 1 hour. Thereafter volatiles were removed by vacuum distillation at 130 °C and 15 mbar for a period of 1 hour. The reaction product was characterized by gel permeation chromatography: Mn 4482 g/mol, Mw 31658 g/mol

### Preparation of Intermediate I4

### Reaction of a methyl-hydrogen siloxane of average formula MH2D37 with trimethylolpropane diallylether and allylglycol (molar ratio 3:2:2.3)

5.12 % of the silicon atoms of the polysiloxane MH2D37 have Si-H groups. This corresponds to a reaction product wherein the number of links between non-polysiloxane segments and polysiloxane segments in the polymer is 5.12 %, calculated on the average number of silicon atoms per polysiloxane segment.

In a flask equipped with stirrer, thermometer, reflux condenser and nitrogen purge were placed 91.31 g of the methyl-hydrogen siloxane. The flask was heated to 75°C and 0.22 g of a 0.2% solution of Karstedt catalyst in xylene were added. During a period of 5 minutes 4.34 g of trimethylolpropane diallylether were via a dropping funnel. An initial temperature increased to 106°C was observed. The reaction mixture was stirred at 100 °C for a period of 3 hours and a further hour at 110°. Subsequently, 4.93 g of allylglycol were added via a dropping funnel during a period of 5 minutes, followed by 3 more hours of stirring at 100 °C. Thereafter volatiles were removed by vacuum distillation at 130 °C and 15 mbar. The reaction product was characterized by gel permeation chromatography: Mn 2861 g/mol, Mw 22112 g/mol

### Example 12

### Reaction of Intermediate I4 with methyl methacrylate

In a flask equipped with stirrer, thermometer, reflux condenser, air inlet, and water separator were placed 83.22 g of intermediate I4 and 16.78 g of methyl methacrylate, 0.1 g of 4-methoxyphenol, and 0.1 g of 2,6-Di-tert-butyl-4-methylphenol. The mixture was heated to 105 ° C and water was removed by azeotropic distillation. After removal of all water, the mixture was cooled to 50 °C and 0.50 g of zirconium acetylacetonate were added. The mixture was heated to reflux and methanol was distilled off for 12 hours. Subsequently, volatiles were evaporated by rotary evaporation (80°C, 45 mbar). NMR analysis indicated that about 90 % of the hydroxyl groups had been converted to methacryloyl groups. The reaction product was further characterized by gel permeation chromatography: Mn 4043 g/mol, Mw 20136 g/mol.

### Application tests

### Preparation of solvent-borne clear coat composition

A clear coat composition was prepared from the raw materials summarized in Table 1:

| **Raw materials** | **Parts by weight** |
|---|---|
| PART A | |
| Setalux 1184 SS-51 (acrylic polyol from allnex) | 76.4 |
| Methoxypropylacetate | 6.2 |
| Xylene | 17.4 |
| Polymer of the Examples above | 2.0 |
| | |

| PART B | |
|---|---|
| Desmodur N75 MPA/X (Aliphatic polyisocyanate from Covestro) | 10.0 |

The components of Part A were mixed to form a homogenous solution.

Immediately prior to application of the coating composition to a substrate, Part A and Part B were mixed to form a homogeneous solution.

To prepare clear coats, clear coat compositions were applied on glass plates using a 100 µm spiral doctor blade. After a flash-off period of 20 minutes at room temperature, the applied coating was cured at 60 °C for a period of 16 hours.

After curing, the surface of the clear coats was subjected to the following tests.

### Determination of the Contact Angle of Water

The contact angle of water was determined on the coated substrates prepared as described above using a Krüss instrument (model "easy drop" having an integrated camera). The contact angle of water was measured in order to characterize the hydrophobicity of a surface. The measurements were performed at 23° C. and a relative humidity of 65%. The results were evaluated by using the software provided together with the Krüss instrument. The higher the contact angle is, the more pronounced is the hydrophobicity and the easy-to-clean effect.

### Determination of the Surface Energy and the Polar and Disperse Parts Thereof

For these measurements, five different test liquids with well-known surface tensions and polar and disperse parts were used. The test liquids were water, glycerol, ethylene glycol, 1-octanol and n-dodecane. The contact angle of the test liquids on the coated substrates was measured by the contact angle method as described above from drop volumes of 5 to 11 µL. The surface energy was determined with the method of Owens-Wendt-Rabel and Kaelble. The lower the polar part of the surface energy, the more advanced is the desired easy-to-clean effect.

### Edding Test as anti-Marker test

The film surface was inscribed with an Edding 400 permanent marker and a visual assessment was made of whether the Surface can be written on. An assessment was made of whether the ink spreads on the surface, or contracts. After the ink had dried, an attempt was made to remove it by wiping with a dry cloth. Evaluation: 1-5:
1 = ink contracts, can be removed without residue using a paper cloth
5 = ink spreads very well on the substrate, and is virtually impossible to remove

### Carbon Black Slurry Test as anti-dirt pick-up test

The carbon black FW 200 slurry had the following composition: 57.6 g water, 26.3 g DISPERBYK^{®}-190 (40%) from BYK-Chemie GmbH, 1.0 g BYK-024 from BYK-Chemie GmbH, 0.1 g Acticide MBS (a biocide from Thor Chemie) and 15.0 g coloring carbon black FW 200 (obtainable from Evonik Industries). The aforesaid components were milled with a Dispermat CV (Teflon blades, 60 minutes, 10000 rpm (18 m/sec), 40° C.). The weight ratio of the mill base to the glass beads (∅1 mm) was 1:1.

The slurry was applied onto the surface of the clear coat with a brush and the plates were stored 1 hour at 100° C. Next, the pigment was washed off with water and a soft cloth, so that the loose pigment can be removed.

### Evaluation: 1-5:

The residues remaining are assessed
1 = no residues
5 = major residues

### Mineral Oil Run-Off Test as hydrophoby/oleophoby test:

One drop of commercially customary mineral oil was placed on the film surface. The coated film surface was then inclined until the drop had run about 10 cm. After 5 minutes, the oil track or drop reformation was evaluated visually.

### Evaluation: 1-5:

1= the oil track immediately reforms into individual drops
5 = the oil track does not reform, but instead possibly spreads further

**Table 2 below summarizes the test results with the clear coats**

| Additive | Contact Angle Water [°] | Polar Part [in mN/m] | Disperse Part [in mN/m] | Surface Energy Total [in mN/m] | Edding Test | Slurry Test | Oil Repellency |
|---|---|---|---|---|---|---|---|
| None | 80 | 6.8 | 22.3 | 29.1 | 5 | 3-4 | 4 |
| Com. Ex. A | 94 | 2 | 23.4 | 25.4 | 2 | 2 | 1-2 |
| Comp. Ex. B | 86 | 4.5 | 23.3 | 27.8 | 4 | 2-3 | 1-2 |
| Ex. 1 | 102 | 0.3 | 24.9 | 25.2 | 2 | 1-2 | 1 |
| Ex. 2 | 98 | 0.9 | 25 | 25.9 | 1 | 1-2 | 1-2 |
| Ex. 3 | 102 | 0.3 | 22.3 | 22.6 | 1 | 1-2 | 1-2 |
| Ex. 4 | 102 | 0.2 | 22.7 | 22.9 | 1 | 2 | 1 |
| Ex. 5 | 96 | 1.2 | 21.4 | 22.6 | 1 | 1-2 | 1 |
| Ex. 6 | 100 | 0.9 | 19.1 | 20.0 | 1 | 1-2 | 1 |
| Ex. 7 | 96 | 1.7 | 18.8 | 20.5 | 1 | 1-2 | 1 |
| Ex. 8 | 99 | 1 | 18.9 | 19.9 | 1 | 1-2 | 1 |
| Ex. 9 | 103 | 0.3 | 22.8 | 23.1 | 1 | 1-2 | 1 |
| Ex. 10 | 98 | 0.8 | 22.5 | 23.3 | 1 | 1-2 | 1 |
| Ex. 11 | 96 | 1.3 | 20.7 | 22.0 | 1-2 | 1-2 | 1 |

From the results in Table 2 it can be concluded that the polymers of the invention cause a higher water contact angle than the comparative examples on the clear coat surfaces. They also cause a lower polar part contribution of the total surface energy. This is an indication that the polysiloxanes of the invention hydrophobize the coating surface and equip it with "easy - to - clean" properties. This is reflected in the Soiling Tests on the coatings represented by the Edding Test, Carbon Black Slurry Test and Mineral Oil Run-Off Test.

The results show that by using the polymers of the invention as additive, dirt (as carbon black)-repelling and oil-repelling surfaces with improved anti-marker behavior (Edding test) are obtained whose performances are exceeding that of the comparative products.

## Claims

1. Use of a polymer for improving the cleanability of a surface coating or for reducing the dirt pick up of a surface coating, wherein the polymer is a non-crosslinked polymer having a polymer main chain comprising
i) polysiloxane segments comprising repeating units of the formula (I) 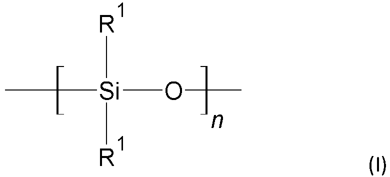 wherein R¹ independent of each occurrence represents a hydrocarbyl group and n is an integer in the range of 6 to 150, and
ii) non-polysiloxane segments having at least one functional group comprising at least one of hydroxyl group, acryloyl group, methacryloyl group, acetyl group, urethane group, and methyl ether group,
wherein the number of links between non-polysiloxane segments and polysiloxane segments in the polymer is less than 9.5 %, calculated on the average number of silicon atoms per polysiloxane segment, and wherein at least one non-polysiloxane segment is located between two polysiloxane segments.

2. The use according to claim 1, wherein the number of links between non-polysiloxane segments and polysiloxane segments in the polymer is less than 8.0 %, calculated on the average number of silicon atoms per polysiloxane segment.

3. The use according to claim 1 or 2, wherein R¹ independent of each occurrence represents a C₁ to C₄ alkyl group or a phenyl group.

4. The use according to any one of the preceding claims, wherein n in formula (I) is an integer in the range of 10 to 120.

5. The use according to any one of the preceding claims, wherein the functional groups are linked to the non-polysiloxane segment via a group comprising at least one of an ester group or an ether group.

6. The use according to any one of the preceding claims, wherein the average number of functional groups per non-polysiloxane segment is in the range of 0.8 to 2.5.

7. The use according to any one of the preceding claims, wherein the functional groups comprise hydroxyl groups.

8. The use according to any one of the preceding claims, wherein the polymer has a weight average molecular weight as determined by the method disclosed in the description in the range of 2000 g/mol to 100000 g/mol.

9. The use according to any one of the preceding claims, wherein the terminal segments are non-polysiloxane segments.

10. The use according to any one of the preceding claims, wherein the polymer is obtainable by a process comprising
a) Providing a polysiloxane having at least two Si-H groups, wherein less than 9.5 % of the silicon atoms of the polysiloxane have Si-H groups,
b) Providing a non-polysiloxane compound having at least two ethylenically unsaturated groups per molecule and,
c) Providing a non-polysiloxane compound having one ethylenically unsaturated group per molecule,
wherein at least one of b) or c) has at least one functional group per molecule comprising at least one of hydroxyl group, acryloyl group, methacryloyl group, acetyl group, urethane group, and methyl ether group,
d) Covalently linking to the polysiloxane having at least two Si-H groups, the non-polysiloxane compound having at least two ethylenically unsaturated groups per molecule, and the non-polysiloxane compound having one ethylenically unsaturated group per molecule.

11. The use according to any one of the preceding claims, wherein the polymer is included in a curable composition comprising
i) a binder having functional groups comprising at least one of hydroxyl group, acryloyl group, methacryloyl group, acetyl group, urethane group, and methyl ether group, and
ii) a crosslinking agent or crosslinking initiator for the functional groups of the binder.

12. The use according to claim 11, wherein the polymer is included in the composition in an amount of from 0.10 to 10.00 % by weight, based on the total weight of the composition.

13. A method for improving the cleanability of a surface coating or for reducing the dirt pick up of a surface coating, comprising including in a surface coating composition a non-crosslinked polymer having a polymer main chain comprising
i) polysiloxane segments comprising repeating units of the formula (I) 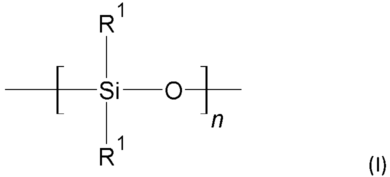 wherein R¹ independent of each occurrence represents a hydrocarbyl group and n is an integer in the range of 6 to 150, and
ii) non-polysiloxane segments having at least one functional group comprising at least one of hydroxyl group, acryloyl group, methacryloyl group, acetyl group, urethane group, and methyl ether group,
wherein the number of links between non-polysiloxane segments and polysiloxane segments in the polymer is less than 9.5 %, calculated on the average number of silicon atoms per polysiloxane segment, and wherein at least one non-polysiloxane segment is located between two polysiloxane segments.

## Patentansprüche

1. Verwendung eines Polymers zur Verbesserung der Reinigungsfähigkeit einer Oberflächenbeschichtung oder zur Verringerung der Schmutzaufnahme einer Oberflächenbeschichtung, wobei es sich bei dem Polymer um ein unvernetztes Polymer mit einer Polymerhauptkette, umfassend
i) Polysiloxan-Segmente, umfassend Wiederholungseinheiten der Formel (I) 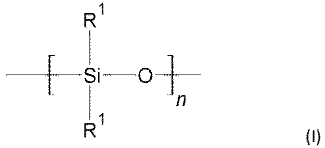 wobei R¹ unabhängig von jedem Vorkommen für eine Hydrocarbylgruppe steht und n eine ganze Zahl im Bereich von 6 bis 150 ist, und
ii) Nicht-Polysiloxan-Segmente mit mindestens einer funktionellen Gruppe, die mindestens eines von Hydroxylgruppe, Acryloylgruppe, Methacryloylgruppe, Acetylgruppe, Urethangruppe und Methylethergruppe umfasst,
handelt, wobei die Zahl der Verknüpfungen zwischen Nicht-Polysiloxan-Segmenten und Polysiloxan-Segmenten in dem Polymer, berechnet auf die durchschnittliche Zahl von Siliciumatomen pro Polysiloxan-Segment, weniger als 9,5 % beträgt und wobei sich mindestens ein Nicht-Polysiloxan-Segment zwischen zwei Polysiloxan-Segmenten befindet.

2. Verwendung nach Anspruch 1, wobei die Zahl der Verknüpfungen zwischen Nicht-Polysiloxan-Segmenten und Polysiloxan-Segmenten in dem Polymer, berechnet auf die durchschnittliche Zahl von Siliciumatomen pro Polysiloxan-Segment, weniger als 8,0 % beträgt.

3. Verwendung nach Anspruch 1 oder 2, wobei R¹ unabhängig von jedem Vorkommen für eine C₁- bis C₄-Alkylgruppe oder eine Phenylgruppe steht.

4. Verwendung nach einem der vorhergehenden Ansprüche, wobei n in Formel (I) eine ganze Zahl im Bereich von 10 bis 120 ist.

5. Verwendung nach einem der vorhergehenden Ansprüche, wobei die funktionellen Gruppen über eine Gruppe, die mindestens eines von einer Estergruppe oder einer Ethergruppe umfasst, mit dem Nicht-Polysiloxan-Segment verknüpft sind.

6. Verwendung nach einem der vorhergehenden Ansprüche, wobei die durchschnittliche Zahl von funktionellen Gruppen pro Nicht-Polysiloxan-Segment im Bereich von 0,8 bis 2,5 liegt.

7. Verwendung nach einem der vorhergehenden Ansprüche, wobei die funktionellen Gruppen Hydroxylgruppen umfassen.

8. Verwendung nach einem der vorhergehenden Ansprüche, wobei das Polymer ein gewichtsmittleres Molekulargewicht gemäß Bestimmung nach der in der Beschreibung offenbarten Methode im Bereich von 2000 g/mol bis 100.000 g/mol aufweist.

9. Verwendung nach einem der vorhergehenden Ansprüche, wobei es sich bei den endständigen Segmenten um Nicht-Polysiloxan-Segmente handelt.

10. Verwendung nach einem der vorhergehenden Ansprüche, wobei das Polymer durch ein Verfahren erhältlich ist, das Folgendes umfasst:
a) Bereitstellen eines Polysiloxans mit mindestens zwei Si-H-Gruppen, wobei weniger als 9,5 % der Siliciumatome des Polysiloxans Si-H-Gruppen aufweisen,
b) Bereitstellen einer Nicht-Polysiloxan-Verbindung mit mindestens zwei ethylenisch ungesättigten Gruppen pro Molekül und
c) Bereitstellen einer Nicht-Polysiloxan-Verbindung mit einer ethylenisch ungesättigten Gruppe pro Molekül,
wobei mindestens eines von b) oder c) mindestens eine funktionelle Gruppe pro Molekül aufweist, die mindestens eines von Hydroxylgruppe, Acryloylgruppe, Methacryloylgruppe, Acetylgruppe, Urethangruppe und Methylethergruppe umfasst,
d) kovalentes Verknüpfen der Nicht-Polysiloxan-Verbindung mit mindestens zwei ethylenisch ungesättigten Gruppen pro Molekül und der Nicht-Polysiloxan-Verbindung mit einer ethylenisch ungesättigten Gruppe pro Molekül mit dem Polysiloxan mit mindestens zwei Si-H-Gruppen.

11. Verwendung nach einem der vorhergehenden Ansprüche, wobei das Polymer in einer härtbaren Zusammensetzung enthalten ist, die
i) ein Bindemittel mit funktionellen Gruppen, die mindestens eines von Hydroxylgruppe, Acryloylgruppe, Methacryloylgruppe, Acetylgruppe, Urethangruppe und Methylethergruppe umfassen, und
ii) ein Vernetzungsmittel oder einen Vernetzungsinitiator für die funktionellen Gruppen des Bindemittels
umfasst.

12. Verwendung nach Anspruch 11, wobei das Polymer in der Zusammensetzung in einer Menge von 0,10 bis 10,00 Gew.-%, bezogen auf das Gesamtgewicht der Zusammensetzung, enthalten ist.

13. Verfahren zur Verbesserung der Reinigungsfähigkeit einer Oberflächenbeschichtung oder zur Verringerung der Schmutzaufnahme einer Oberflächenbeschichtung, umfassend das Einarbeiten eines unvernetzten Polymers mit einer Polymerhauptkette, umfassend
i) Polysiloxan-Segmente, umfassend Wiederholungseinheiten der Formel (I) 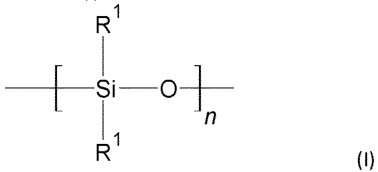 wobei R¹ unabhängig von jedem Vorkommen für eine Hydrocarbylgruppe steht und n eine ganze Zahl im Bereich von 6 bis 150 ist, und
ii) Nicht-Polysiloxan-Segmente mit mindestens einer funktionellen Gruppe, die mindestens eines von Hydroxylgruppe, Acryloylgruppe, Methacryloylgruppe, Acetylgruppe, Urethangruppe und Methylethergruppe umfasst,
wobei die Zahl der Verknüpfungen zwischen Nicht-Polysiloxan-Segmenten und Polysiloxan-Segmenten in dem Polymer, berechnet auf die durchschnittliche Zahl von Siliciumatomen pro Polysiloxan-Segment, weniger als 9,5 % beträgt und wobei sich mindestens ein Nicht-Polysiloxan-Segment zwischen zwei Polysiloxan-Segmenten befindet,
in einer Oberflächenbeschichtungszusammensetzung.

## Revendications

1. Utilisation d'un polymère pour améliorer l'aptitude au nettoyage d'un revêtement de surface ou pour la réduction de l'amassage de saleté d'un revêtement de surface, le polymère étant un polymère non réticulé ayant une chaîne principale de polymère comprenant
i) des segments de polysiloxane comprenant des motifs répétitifs de la formule (I) 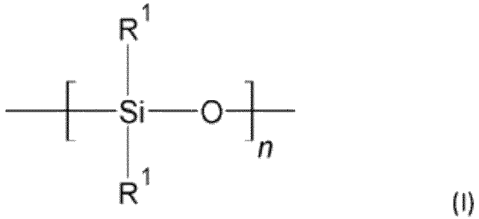 R¹ indépendamment en chaque occurrence représentant un groupe hydrocarbyle et n étant un entier dans la plage de 6 à 150, et
ii) des segments non de polysiloxane ayant au moins un groupe fonctionnel comprenant au moins l'un parmi un groupe hydroxyle, un groupe acryloyle, un groupe méthacryloyle, un groupe acétyle, un groupe uréthane et un groupe éther de méthyle,
le nombre de liens entre des segments non de polysiloxane et des segments de polysiloxane dans le polymère étant inférieur à 9,5 %, calculé sur le nombre moyen d'atomes de silicium par segment de polysiloxane, et au moins un segment non de polysiloxane étant situé entre deux segments de polysiloxane.

2. Utilisation selon la revendication 1, le nombre de liens entre des segments non de polysiloxane et des segments de polysiloxane dans le polymère étant inférieur à 8,0 %, calculé sur le nombre moyen d'atomes de silicium par segment de polysiloxane.

3. Utilisation selon la revendication 1 ou 2, R¹ indépendamment en chaque occurrence représentant un groupe alkyle en C₁ à C₄ ou un groupe phényle.

4. Utilisation selon l'une quelconque des revendications précédentes, n dans la formule (I) étant un entier dans la plage de 10 à 120.

5. Utilisation selon l'une quelconque des revendications précédentes, les groupes fonctionnels étant liés au segment non de polysiloxane via un groupe comprenant au moins l'un parmi un groupe ester ou un groupe éther.

6. Utilisation selon l'une quelconque des revendications précédentes, le nombre moyen de groupes fonctionnels par segment non de polysiloxane étant dans la plage de 0,8 à 2,5.

7. Utilisation selon l'une quelconque des revendications précédentes, les groupes fonctionnels comprenant des groupes hydroxyle.

8. Utilisation selon l'une quelconque des revendications précédentes, le polymère ayant un poids moléculaire moyen en poids comme déterminé par le procédé divulgué dans la description dans la plage de 2 000 g/mole à 100 000 g/mole.

9. Utilisation selon l'une quelconque des revendications précédentes, les segments terminaux étant des segments non de polysiloxane.

10. Utilisation selon l'une quelconque des revendications précédentes, le polymère pouvant être obtenu par un procédé comprenant
a) la fourniture d'un polysiloxane ayant au moins deux groupes Si-H, moins de 9,5 % des atomes de silicium du polysiloxane ayant des groupes Si-H,
b) la fourniture d'un composé non de polysiloxane ayant au moins deux groupes éthyléniquement insaturés par molécule et,
c) la fourniture d'un composé non de polysiloxane ayant un groupe éthyléniquement insaturé par molécule,
au moins l'un parmi b) ou c) ayant au moins un groupe fonctionnel par molécule comprenant au moins l'un parmi un groupe hydroxyle, un groupe acryloyle, un groupe méthacryloyle, un groupe acétyle, un groupe uréthane et un groupe éther de méthyle,
d) la liaison de manière covalente au polysiloxane ayant au moins deux groupes Si-H, du composé non de polysiloxane ayant au moins deux groupes éthyléniquement insaturés par molécule, et du composé non de polysiloxane ayant un groupe éthyléniquement insaturé par molécule.

11. Utilisation selon l'une quelconque des revendications précédentes, le polymère étant compris dans une composition durcissable comprenant
i) un liant ayant des groupes fonctionnels comprenant au moins l'un parmi un groupe hydroxyle, un groupe acryloyle, un groupe méthacryloyle, un groupe acétyle, un groupe uréthane et un groupe éther de méthyle, et
ii) un agent de réticulation ou un initiateur de réticulation pour les groupes fonctionnels du liant.

12. Utilisation selon la revendication 11, le polymère étant compris dans la composition en une quantité allant de 0,10 à 10,00 % en poids, sur la base du poids total de la composition.

13. Procédé pour l'amélioration de l'aptitude au nettoyage d'un revêtement de surface ou pour la réduction de l'amassage de saleté d'un revêtement de surface, comprenant le fait d'inclure dans une composition de revêtement de surface un polymère non réticulé ayant une chaîne principale de polymère comprenant
i) des segments de polysiloxane comprenant des motifs répétitifs de la formule (I) 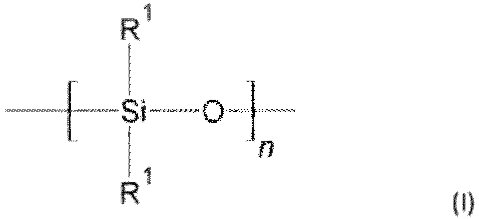 R¹ indépendamment en chaque occurrence représentant un groupe hydrocarbyle et n étant un entier dans la plage de 6 à 150, et
ii) des segments non de polysiloxane ayant au moins un groupe fonctionnel comprenant au moins l'un parmi un groupe hydroxyle, un groupe acryloyle, un groupe méthacryloyle, un groupe acétyle, un groupe uréthane et un groupe éther de méthyle,
le nombre de liens entre des segments non de polysiloxane et des segments de polysiloxane dans le polymère étant inférieur à 9,5 %, calculé sur le nombre moyen d'atomes de silicium par segment de polysiloxane, et au moins un segment non de polysiloxane étant situé entre deux segments de polysiloxane.
